# EUROPEAN PATENT SPECIFICATION

(11) **EP 3 635 078 B1**
(45) Date of publication and mention of the grant of the patent: **07.10.2026**
(21) Application number: 18731885.2
(22) Date of filing: 04.06.2018
(51) Int. Cl.: C10L 1/02, C10L 1/04, C10L 10/14

(54) **METHOD FOR PRODUCING A FUEL COMPOSITION**
VERFAHREN ZUR HERSTELLUNG EINER KRAFTSTOFFZUSAMMENSETZUNG
PROCÉDÉ DE PRODUCTION D'UNE COMPOSITION DE CARBURANT

(30) Priority: 07.06.2017 FI 20175528
(43) Date of publication of application: 15.04.2020
(73) Proprietor: Neste Oyj, 02150 Espoo (FI)
(72) Inventor:
(74) Representative: Kolster Oy Ab
(86) International application number: PCT/FI2018/050418
(87) International publication number: WO 2018/224730

(56) References cited:
- EP-B1- 1 664 249
- US-A1- 2008 244 962
- US-A1- 2014 051 897
- US-A1- 2015 112 106

## Description

### FIELD OF THE INVENTION

The present disclosure relates to a method for producing a fuel composition.

### BACKGROUND

The following background description art may include insights, discoveries, understandings or disclosures, or associations together with disclosures not known to the relevant art prior to the present invention but provided by the present disclosure. Some such contributions disclosed herein may be specifically pointed out below, whereas other such contributions encompassed by the present disclosure the invention will be apparent from their context.

A Fischer-Tropsch (FT) process may be used to convert a mixture of carbon monoxide and hydrogen into liquid hydrocarbons. The process enables producing synthetic fuel from coal, natural gas, or biomass.

A gas to liquids (GTL) process is a refinery process that enables converting natural gas or other gaseous hydrocarbons into longer-chain hydrocarbons, such as gasoline or diesel fuel. Methane-rich gases may be converted into liquid synthetic fuels either via direct conversion or via syngas as an intermediate.

A freezing point of jet fuel is the lowest temperature at which the fuel remains free of solid hydrocarbon crystals that may restrict the flow of the fuel through filters, if present in the fuel system of the aircraft. The temperature of the fuel in the aircraft tank normally falls during flight depending on the aircraft speed, altitude, and flight duration. The freezing point of the fuel needs to be lower than the minimum (i.e. lowest) operational tank temperature.

EP 1664249 B1 discloses a fuel composition of petroleum derived kerosene fuel and FT-derived kerosene fuel, which composition has a lower freezing point than that of the fuel components.

### SUMMARY

The following presents a simplified summary of features disclosed herein to provide a basic understanding of some exemplary aspects of the invention. This summary is not an extensive overview of the invention. It is not intended to identify key/critical elements of the invention or to delineate the scope of the invention. Its sole purpose is to present some concepts disclosed herein in a simplified form as a prelude to a more detailed description. The invention is defined by the appended claims.

According to an aspect, there is provided the subject matter of the independent claims. Embodiments are defined in the dependent claims.

A fuel composition comprises petroleum derived jet fuel component and renewable jet fuel component, wherein the multipurpose fuel composition has a freezing point of -40°C or below, and a cetane number more than 40, preferably more than 45, more preferably more than 50.

An exemplary method comprises producing a multipurpose fuel composition, the method comprising mixing petroleum derived jet fuel component and renewable jet fuel component to obtain a multipurpose fuel composition having a freezing point of -40°C or below, and a cetane number more than 40, preferably more than 45, more preferably more than 50.

One or more examples of implementations are set forth in more detail in the accompanying drawings and the description below. Other features will be apparent from the description and drawings, and from the claims.

### BRIEF DESCRIPTION OF THE DRAWINGS

In the following the invention will be described in greater detail by means of preferred embodiments with reference to the attached drawings, in which
Figure 1 shows measured and calculated freezing points of exemplary fuel compositions comprising a renewable jet fuel component having a distillation range from 180°C to 315°C blended with a petroleum derived jet fuel component;
Figure 2 show measured and calculated freezing points of exemplary fuel compositions comprising a renewable jet fuel component having a distillation range from 145°C to 280°C blended with a petroleum derived jet fuel component.

### DETAILED DESCRIPTION OF EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising", "containing" and "including" should be understood as not limiting the described embodiments to consist of only those features that have been mentioned and such embodiments may contain also features/structures that have not been specifically mentioned.

Jet aircraft is exposed to low operating temperatures, and it is necessary that the fuel used in the aircraft does not freeze in these conditions. Blocking of fuel filters and pumpability of the jet fuel are dependent on the freezing point of the fuel. The Jet A fuel specification has limited the freezing point of the Jet A fuel to a maximum of -40°C. The Jet A-1 fuel specification has limited the freezing point of the Jet A-1 fuel to a maximum of -47°C.

Because jet fuel is a mixture of hundreds of individual hydrocarbons each having its own specific freezing point, jet fuel does not become solid at one temperature. When the fuel is cooled the hydrocarbons with the highest freezing point solidify first. Further cooling causes the hydrocarbons with a lower freezing point to solidify.

The quality of diesel fuel may be determined by using the cetane number (CN). The cetane number is an inverse function of the fuel's ignition delay, and a time period between the start of injection and the first identifiable pressure increase during combustion of the fuel. In a particular diesel engine, higher cetane fuels have shorter ignition delay periods than lower cetane fuels.

Gas-to-liquids (GTL) jet fuel is typically not used in diesel engines in ground vehicles. The properties of the GTL jet fuel (i.e. GTL kerosene), such as the cetane number, flash point and the distillation range are not suitable for modern diesel engine use.

Petroleum derived jet component typically comprises C7 to C15 hydrocarbons or C8 to C16 hydrocarbons, for example. The amount of such hydrocarbons may be more than about 95 wt-% of the component, or more than about 99 wt-% of the component. Petroleum derived jet fuel component typically comprises i-paraffins, n-paraffins, naphthenes, and/or aromatics. In the petroleum derived jet fuel component, the amount of i-paraffins is typically about 15 to about 35 wt-%, or about 20 to about 30 wt-%, such as about 25 wt-%. In the petroleum derived jet fuel component, the amount of n-paraffins is typically about 10 wt-% to about 30 wt-%, or about 15 wt-% to about 25 wt-%, such as about 20 wt-%. In the petroleum derived jet fuel component, the amount of naphthenes is typically about 15 wt-% to about 35 wt-%, or about 20 wt-% to about 30 wt-%, such as about 25 wt-%. In the petroleum derived jet fuel component, the amount of aromatics is typically about 20 wt-% to about 40 wt-%, or about 25 wt-% to about 35 wt-%, such as about 30 wt-%.

Renewable jet fuel component typically comprises i-paraffins and n-paraffins and only a minor amount of other compounds. In the renewable jet fuel component, the amount of i-paraffins is more than about 70 wt-%, more than about 80 wt-%, or more than about 90 wt-%. Typically the amount of C15 to C18 paraffins in the renewable jet fuel component is more than about 70 wt-%, more than about 85 wt-%, or more than about 90 wt-%. In the renewable jet fuel component, the amount of paraffins smaller than C15 paraffins is typically less than about 20 wt-%, less than about 10 wt-%, or less than about 7 wt-%. In the renewable jet fuel component, the amount of paraffins larger than C18 paraffins is typically less than about 10 wt-%, less than about 5 wt-%, or less than about 3 wt-%. The amounts of C15, C16, C17 and C18 hydrocarbons may vary in the renewable jet fuel component.

An embodiment discloses a method for producing a fuel composition, the method comprising mixing petroleum derived jet fuel component and renewable jet fuel component in an amount to obtain a multipurpose fuel composition having a freezing point -40°C or below and a cetane number of more than 40.

An embodiment discloses a method for producing a fuel composition, the method comprising mixing petroleum derived jet fuel component and renewable jet fuel component in an amount to obtain a multipurpose fuel composition having a cetane number of more than 50.

The cetane number of the blend may be obtained by linear calculations from the cetane numbers of the blended components.

An obtained fuel is usable as a multipurpose fuel, i.e. it is usable both as diesel fuel (e.g. in ground vehicles) and as jet fuel (e.g. in aircrafts), since the cetane number of the fuel composition is such that it allows the use of the fuel composition in ground vehicles (such as cars, trucks etc.) in addition to the use in aircrafts. This is logistically beneficial, for example, in remote areas or crisis situations when it may be laborious to provide diesel fuel and jet fuel separately.

An obtained fuel composition has a lower freezing point than that of the components. Thus the freezing point of the fuel composition may be upgraded by utilizing renewable fuel components in jet fuel and multipurpose fuel manufacturing and blending. For example, when blending the petroleum derived jet fuel component and the renewable jet fuel component, the freezing point requirement of Jet A-1 grade (maximum freezing point -47°C) may be fulfilled even though the fuel components were only of Jet A grade (maximum freezing point -40°C).

A difference between the renewable jet fuel component and GTL kerosene is that the GTL kerosene (i.e. GTL jet fuel) has an iso-paraffin content from 20 wt-% to 50 wt-%, whereas the renewable jet fuel component has an iso-paraffin content of more than 70 wt-%, preferably more than 80 wt-%, more preferably more than 90 wt-%.

A further difference between the renewable jet fuel component and GTL kerosene is that the GTL kerosene (i.e. GTL jet fuel) has a freezing point of -42.5°C to -53.5°C and a flash point of 42°C to 48.5°C, whereas the renewable jet fuel component typically has a freezing point of -29°C to -33°C and typically a flash point above 61°C.

Table 1 discloses physical properties of the renewable jet fuel component in comparison with conventional GTL kerosene.

**Table 1. Comparison between renewable jet fuel component and conventional GTL kerosene component**

| | Renewable jet fuel component | GTL kerosene component |
|---|---|---|
| Distillation range (°C) | 180 ... 315 | 130 ... 300 |
| Density (kg/m³) | 780 | 730 ... 770 |

In order to achieve the advantageous freezing point lowering phenomena of the fuel composition, there are requirements for the conventional petroleum derived jet fuel component and renewable jet fuel component, since it is required that the difference between the freezing points of the components used is less than 25°C.

The renewable jet fuel component herein refers to a jet fuel component produced from vegetable oil and/or animal fats. Palm oil, rapeseed oil, and/or waste fat from the food industry may be used as a raw material for the production of the renewable jet fuel component. Other examples of possible raw materials include waste fats from the food industry, biogas, algae oil, jatropha oil, soybean oil, and/or microbial oil. Examples of possible waste fats from the food industry include cooking oil, animal fat, and/or fish fat.

Renewable fuel refers to biofuel produced from biological resources formed through contemporary biological processes. Herein the renewable jet fuel component is produced from vegetable oil and/or animal fat.

The renewable jet fuel component is produced by means of a hydrotreatment process. Hydrotreatment involves various reactions where molecular hydrogen reacts with other components, or the components undergo molecular conversions in the presence of molecular hydrogen and a solid catalyst. The reactions include hydrogenation, hydrodeoxygenation, hydrodesulfurization, hydrodenitrification, hydrodemetallization, hydrocracking, and isomerization. The renewable jet fuel component may have different distillation ranges which provide the desired properties to the component, depending on the intended use.

In an embodiment, the freezing point of the multipurpose fuel composition is -55°C or below, preferably -55.2°C or below, more preferably -55.6°C or below, yet more preferably -55.9°C or below, yet more preferably -57.4°C or below, yet more preferably -58.2°C or below.

The multipurpose fuel composition comprises at least from 5 vol-% of renewable jet fuel component, more preferably at least 10 vol-%, yet more preferably at least 15 vol-%, yet more preferably at least 15 vol-%, to 50 vol-%.

The petroleum derived jet fuel component has a freezing point between -47°C and -60°C, wherein the difference between the freezing point of the renewable jet fuel component and the freezing point of the petroleum derived jet fuel component is less than 25°C.

### EXAMPLE 1

The freezing points of multipurpose fuel compositions were measured using a test method IP 529. The measured freezing points of the fuel compositions were compared to freezing points calculated by linear calculations (i.e. based on the volume percentages of the components in the fuel composition).

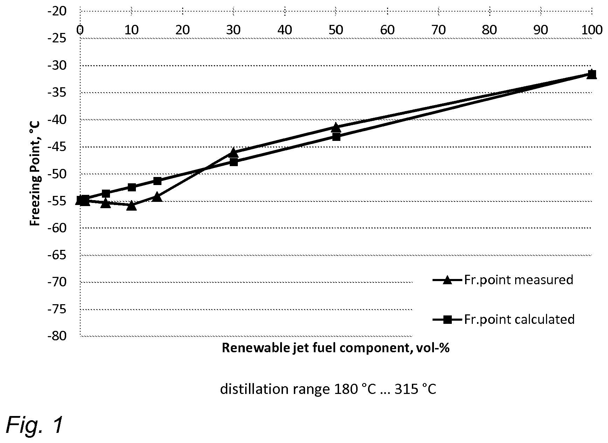

It was noticed that fuel compositions comprising renewable jet fuel component with a distillation range from 180°C to 315°C, blended with a petroleum derived jet fuel component in a method not according to the invention had a better (i.e. lower) freezing point than predicted according to linear calculations (see Table 2 and Figure 1). This effect was seen when the amount of the renewable jet fuel component in the blends was 20 vol-% or less.

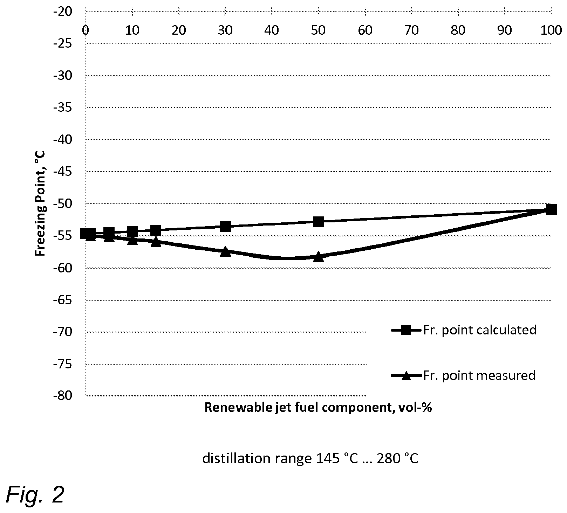

When renewable jet fuel component having a distillation range from 145°C to 280°C was blended with a petroleum derived jet fuel component (see Table 3, Figure 2, Table 4), the lowering of the freezing point was even bigger, and the effect was seen with up to over 50 vol-% of renewable jet fuel component in the blend.

The freezing point lowering phenomena of the blend was detected when the petroleum derived jet fuel had a freezing point between -47°C and -60°C, and when the difference between the renewable fuel freezing point and petroleum derived jet fuel freezing point was less than 25°C.

**Table 2. Measured and calculated freezing points of fuel compositions comprising renewable jet fuel component with distillation range 180°C - 315°C blended with petroleum derived jet fuel component**

| Renewable jet fuel content (vol-%) | Measured freezing point (°C) | Calculated freezing point, linear (°C) | Difference (°C) |
|---|---|---|---|
| 0 | -54.7 | -54.7 | 0.0 |
| 1 | -54.9 | -54.5 | **0.4** |
| 5 | -55.3 | -53.5 | **1.8** |
| 10 | -55.7 | -52.4 | **3.3** |
| 15 | -54.1 | -51.2 | **2.9** |
| 30 | -46.0 | -47.7 | -1.7 |
| 50 | -41.3 | -43.1 | -1.8 |
| 100 | -31.5 | -31.5 | 0.0 |

**Table 3. Measured and calculated freezing points of fuel compositions comprising renewable jet fuel component with distillation range 145°C - 280°C blended with petroleum derived jet fuel component**

| Renewable jet fuel content (vol-%) | Measured freezing point (°C) | Calculated freezing point, linear (°C) | Difference (°C) |
|---|---|---|---|
| 0 | -54.7 | -54.7 | 0.0 |
| 1 | -55 | -54.7 | **0.3** |
| 5 | -55.2 | -54.5 | **0.7** |
| 10 | -55.6 | -54.3 | **1.3** |
| 15 | -55.9 | -54.1 | **1.8** |
| 30 | -57.4 | -53.6 | **3.8** |
| 50 | -58.2 | -52.8 | **5.4** |
| 100 | -50.9 | -50.9 | 0.0 |

**Table 4. Measured and calculated freezing points of fuel compositions comprising renewable jet fuel component with distillation range 145°C - 280°C blended with petroleum derived jet fuel component**

| Renewable jet fuel component content (vol-%) | Measured freezing point (°C) | Calculated freezing point (°C) | Difference (°C) |
|---|---|---|---|
| 0 | -59.0 | -59.0 | 0.0 |
| 50 | -57.1 | -55.4 | **1.7** |
| 100 | -51.8 | -51.8 | 0.0 |

Figure 1 shows measured and calculated freezing points for a fuel composition comprising renewable jet fuel component with a distillation range from 180°C to 315°C blended with petroleum derived jet fuel component.

Figure 2 shows measured and calculated freezing points for a fuel composition comprising renewable jet fuel component with a distillation range from 145°C to 280°C blended with petroleum derived jet fuel component.

Cetane numbers of the multipurpose fuel compositions containing renewable jet fuel component and petroleum derived jet fuel component were measured using the EN15195 method. The results obtained are presented in Table 5. Table 5 shows the content of renewable jet fuel component (RJF) in the fuel composition, as well as the cetane number of the fuel composition. The results show that cetane numbers behave linearly. Therefore, the cetane number of the multipurpose fuel composition may be calculated from the cetane numbers of the renewable jet fuel component and petroleum derived jet fuel component, as presented in Table 6.

**Table 5. Cetane numbers of blends containing petroleum derived jet fuel component and renewable jet fuel component having a distillation range from 180°C to 315°C**

| | | | | |
|---|---|---|---|---|
| RJF content (vol-%) | 100 | 30 | 15 | 0 |
| Cetane number | 77.2 | 52.7 | 48.2 | 43.1 |

**Table 6. Calculated cetane numbers for blends containing petroleum derived jet fuel component and renewable jet fuel component having a distillation range from 145°C to 280°C**

| | | | | |
|---|---|---|---|---|
| RJF content (vol-%) | 100 | 30 | 15 | 0 |
| Cetane number | 61.5 | 48.62 | 45.95 | 43.2 |

The example 1 shows the superior freezing point behavior of the renewable jet fuel based blending component. This behavior was seen with up to 20 vol-% renewable jet fuel component in the blend with conventional petroleum derived jet fuel. Similar kind of superior freezing point behaviour was also shown with the renewable jet fuel component with a slightly lower distillation range. The superior freezing point behaviour was seen with up to over 50 vol-% renewable jet fuel component in the blend with conventional petroleum derived jet fuel component.

The freezing points and cetane numbers of the multipurpose compositions are such that they may be used in aircrafts as well as in ground vehicles.

### EXAMPLE 2 (COMPARATIVE EXAMPLE)

The freezing points of fuel compositions were measured using a test method IP 529. The measured freezing points of the fuel compositions were compared to freezing points calculated by linear calculations (i.e. based on the volume percentages of the components in the fuel composition). It was noticed that fuel compositions comprising renewable jet fuel component with a freezing point of -31.5°C, blended with a petroleum derived jet fuel component with a freezing point of -73.3°C, did not have a better freezing point than predicted according to linear calculations (see Table 7).

**Table 7. Measured and calculated freezing points of renewable jet fuel component and petroleum derived jet fuel component blends**

| Renewable jet fuel component content (vol-%) | Measured freezing point (°C) | Calculated freezing point (°C) | Difference (°C) |
|---|---|---|---|
| 100 | -31.5 | -31.5 | 0.0 |
| 50 | -41.7 | -52.4 | -10.7 |
| 30 | -47.4 | -60.8 | -13.4 |
| 15 | -53.4 | -67.0 | -13.6 |
| 10 | -57.2 | -69.1 | -11.9 |
| 5 | -62.8 | -71.2 | -8.4 |
| 1 | -73.0 | -72.9 | 0.1 |
| 0 | -73.3 | -73.3 | 0.0 |

It will be obvious to a person skilled in the art that, as the technology advances, the inventive concept can be implemented in various ways. The invention and its embodiments are not limited to the examples described above but may vary within the scope of the claims.

## Claims

1. A method for producing a multipurpose fuel composition, wherein the method comprises mixing petroleum derived jet fuel component and renewable jet fuel component to obtain a multipurpose fuel composition having a freezing point of -40_{°}C or below, and a cetane number more than 40, preferably more than 45, more preferably more than 50,
wherein the multipurpose fuel composition comprises from at least 5 vol-% to 50 vol-% of the renewable jet fuel component,
wherein the renewable jet fuel component is a hydrotreated middle distillate having a distillation range
from 145°C to 280 °C,
wherein the petroleum derived jet fuel component has a freezing point between -47°C and -60°C,
wherein the difference between the freezing point of the renewable jet fuel component and the freezing point of the petroleum derived jet fuel component is less than 25°C,
wherein the renewable jet fuel component has an iso-paraffin content of more than 70 wt-%, preferably more than 80 wt-%, more preferably more than 90 wt-%, and
wherein the renewable jet fuel component is produced by means of hydrogenation, hydrodeoxygenation, hydrodesulfurization, hydrodenitrification, hydrodemetallization, hydrocracking and/or isomerization.

2. A method as claimed in claim 1, wherein the freezing point of the composition is less than -47°C.

3. A method as claimed in claim 1 or 2, wherein the freezing point of the composition is -55°C or below, preferably -55.2°C or below, more preferably - 55.6°C or below, yet more preferably -55.9°C or below, yet more preferably - 57.4°C or below, yet more preferably -58.2°C or below.

4. A method as claimed in any of claims 1-3, wherein the renewable jet fuel component is jet fuel produced from vegetable oil, animal fat, fish fat, palm oil, rapeseed oil, cooking oil, waste fat from the food industry, biogas, algae oil, jatropha oil, soybean oil, and/or microbial oil.

## Patentansprüche

1. Verfahren zur Herstellung einer Mehrzweck-Kraftstoffzusammensetzung, wobei das Verfahren das Mischen einer aus Erdöl gewonnenen Flugzeugtreibstoffkomponente und einer Komponente aus erneuerbarem Flugzeugtreibstoff umfasst, um eine Mehrzweck-Kraftstoffzusammensetzung zu erhalten, die einen Gefrierpunkt von -40 °C oder darunter und eine Cetanzahl von mehr als 40, vorzugsweise mehr als 45, bevorzugter mehr als 50 aufweist,
wobei die Mehrzweck-Kraftstoffzusammensetzung von mindestens 5 Vol.-% bis 50 Vol.-% der Komponente aus erneuerbarem Flugzeugtreibstoff umfasst,
wobei die Komponente aus erneuerbarem Flugzeugtreibstoff ein hydrobehandeltes mittleres Destillat ist, das einen Destillierungsbereich von 145 °C bis 280 °C aufweist,
wobei die aus Erdöl gewonnene Flugzeugtreibstoffkomponente einen Gefrierpunkt zwischen -47 °C und -60 °C aufweist,
wobei die Differenz zwischen dem Gefrierpunkt der Komponente aus erneuerbarem Flugzeugtreibstoff und dem Gefrierpunkt der aus Erdöl gewonnenen Flugzeugtreibstoffkomponente weniger als 25 °C beträgt,
wobei die Komponente aus erneuerbarem Flugzeugtreibstoff einen Iso-Paraffingehalt von mehr als 70 Gew.-%, vorzugsweise mehr als 80 Gew.-%, bevorzugter mehr als 90 Gew.-% aufweist, und
wobei die Komponente aus erneuerbarem Flugzeugtreibstoff mittels Hydrierung, Hydrodeoxygenierung, Hydrodesulfurierung, Hydrodenitrifikation, Hydrodemetallisierung, Hydrocracking und/oder Isomerisierung hergestellt wird.

2. Verfahren nach Anspruch 1, wobei der Gefrierpunkt der Zusammensetzung weniger als -47 °C beträgt.

3. Verfahren nach Anspruch 1 oder 2, wobei der Gefrierpunkt der Zusammensetzung -55 °C oder darunter, vorzugsweise -55,2 °C oder darunter, bevorzugter -55,6 °C oder darunter, weiterhin bevorzugter -55,9 °C oder darunter, weiterhin bevorzugter -57,4 °C oder darunter, weiterhin bevorzugter -58,2 °C oder darunter beträgt.

4. Verfahren nach einem der Ansprüche 1-3, wobei die Komponente aus erneuerbarem Flugzeugtreibstoff ein Flugzeugtreibstoff ist, der aus Pflanzenöl, Tierfett, Fischfett, Palmöl, Rapsöl, Speiseöl, Altfett aus der Lebensmittelindustrie, Biogas, Algenöl, Jatrophaöl, Sojaöl und/oder mikrobiellem Öl hergestellt wird.

## Revendications

1. Procédé de production d'une composition de carburant multifonctionnelle, dans lequel le procédé comprend l'étape consistant à mélanger un composant de carburéacteur dérivé du pétrole et un composant de carburéacteur renouvelable afin d'obtenir une composition de carburant multifonctionnelle présentant un point de congélation de -40 °C ou inférieur, et un indice de cétane supérieur à 40, de préférence supérieur à 45, plus préférablement supérieur à 50,
dans lequel la composition de carburant multifonctionnelle comprend de au moins 5 % en volume à 50 % en volume du composant de carburéacteur renouvelable,
dans lequel le composant de carburéacteur renouvelable est un distillat moyen hydrotraité présentant une plage de distillation comprise
entre 145 °C et 280 °C,
dans lequel le composant de carburéacteur dérivé du pétrole présente un point de congélation compris entre -47 °C et -60 °C,
dans lequel la différence entre le point de congélation du composant de carburéacteur renouvelable et le point de congélation du composant de carburéacteur dérivé du pétrole est inférieure à 25 °C,
dans lequel le composant de carburéacteur renouvelable présente une teneur en isoparaffines supérieure à 70 % en poids, de préférence supérieure à 80 % en poids, et de manière encore plus préférée supérieure à 90 % en poids, et
dans lequel le composant de carburéacteur renouvelable est produit par hydrogénation, hydrodésoxygénation, hydrodésulfuration, hydrodénitrification, hydrodémétallisation, hydrocraquage et/ou isomérisation.

2. Procédé selon la revendication 1, dans lequel le point de congélation de la composition est inférieur à -47 °C.

3. Procédé selon la revendication 1 ou la revendication 2, dans lequel le point de congélation de la composition est de -55 °C ou moins, de préférence de -55,2 °C ou moins, plus préférablement de -55,6 °C ou moins, encore plus préférablement de - 55,9 °C ou moins, encore plus préférablement de -57,4 °C ou moins, et encore plus préférablement de -58,2 °C ou moins.

4. Procédé selon l'une quelconque des revendications 1 à 3, dans lequel le composant de carburéacteur renouvelable est un carburéacteur produit à partir d'huile végétale, de graisse animale, de graisse de poisson, d'huile de palme, d'huile de colza, d'huile de cuisson, de graisses résiduelles issues de l'industrie alimentaire, de biogaz, d'huile d'algues, d'huile de jatropha, d'huile de soja et/ou d'huile microbienne.
